# EUROPEAN PATENT SPECIFICATION

(11) **EP 3 509 779 B1**
(45) Date of publication and mention of the grant of the patent: **30.07.2025**
(21) Application number: 17764912.6
(22) Date of filing: 31.08.2017
(51) Int. Cl.: B23B 27/08, B23B 29/04

(54) **INSERT ADAPTOR FOR PARTING OFF AND TOOL ASSEMBLY INCLUDING SUCH AN ADAPTOR**
EINSATZADAPTER ZUM ABTRENNEN UND WERKZEUGANORDNUNG MIT SOLCH EINEM ADAPTER
ADAPTATEUR D'INSERT DESTINÉ AU TRONÇONNAGE ET ENSEMBLE OUTIL COMPRENANT CET ADAPTATEUR

(30) Priority: 06.09.2016 US 201662383739 P
(43) Date of publication of application: 17.07.2019
(73) Proprietor: Iscar Ltd., 24959 Tefen (IL)
(72) Inventor: BEN HAROUCHE, David, 22327 Nahariya (IL); MALKA, Asaf, 25147 Kfar Vradim (IL)
(74) Representative: Vossius & Partner Patentanwälte Rechtsanwälte mbB
(86) International application number: PCT/IL2017/050975
(87) International publication number: WO 2018/047162

(56) References cited:
- EP-A1- 0 636 442
- EP-A2- 2 082 820
- WO-A1-2009/022570
- DE-A1- 3 241 748
- DE-U1- 29 908 767
- DE-U1- 7 820 161
- US-A- 5 044 838
- US-A1- 2012 082 519
- US-A1- 2013 156 516
- US-A1- 2013 170 917
- US-B1- 6 234 727

## Description

### FIELD OF THE INVENTION

The subject matter of the present application relates to an insert adaptor for parting off operations, the insert adaptor comprising pockets for inserts. In particular, the subject matter of the present application relates to insert adaptors which are only rotated (i.e. indexed) about a central index axis to bring a single pocket, and hence the insert mounted in that pocket, into an operational position for machining a workpiece.

### BACKGROUND OF THE INVENTION

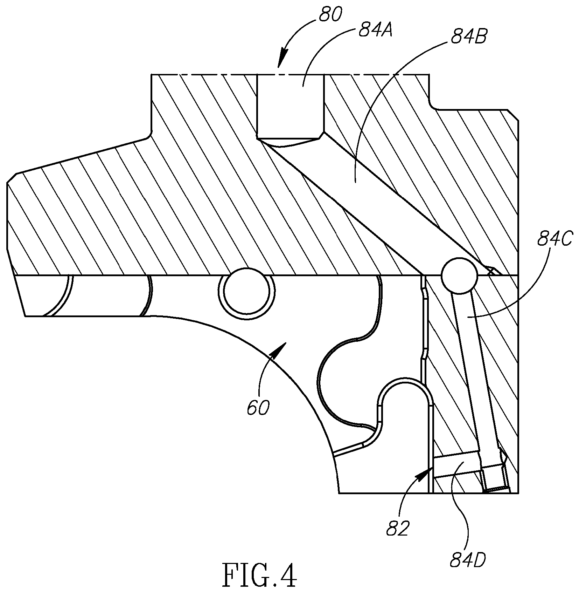

EP 0 497 257 discloses a parting off device for rotating workpieces comprising an adaptor rotatably connected to a tool holder and comprising an insert in a pocket of the adaptor. As shown in Fig. 4, the insert pockets are positioned at diametrically opposed sides of the adaptor. This is done to maximize cutting depth, since the cutting edges of the inserts are wider than the adaptor, and to have them positioned closer to each other would reduce the cutting depth capability.

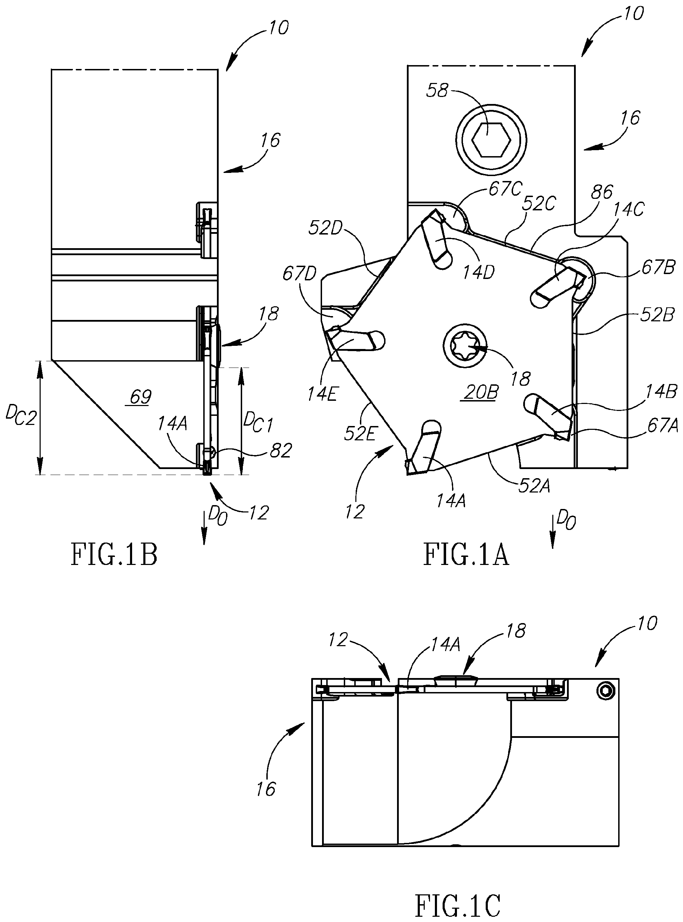

As understood by Fig. 1, the non-rotating tool is configured for the inserts to be used successively as opposed to concurrently. To elaborate, after an operative edge is, for example, worn, a successive edge can be selected to become an operative edge. This can be achieved by one of two ways, namely by replacing the worn insert in the pocket with a new insert or rotating (indexing) the adaptor so that a different insert in a different pocket is presented as a new operative edge.

It will be understood that the present application is directed only to adaptors of the type being configured for rotation (indexing) about a central index axis (hereinafter called adaptor index axis) which positions a different insert to be the active insert for a parting off application. Stated differently it relates to insert adaptors which position a single insert in an operational position and after use thereof position a different single insert in the operational position (i.e. successive insert use).

For such parting operations to work, a workpiece is rotated and the adaptor is moved in an operational direction into the workpiece. The operational direction is typically parallel, or substantially parallel, with an elongation direction of a tool holder's elongated shank.

It is an object of the present application to provide a new and improved insert adaptor and tool assembly comprising same.

### SUMMARY OF THE INVENTION

In accordance with the invention of the present application, there is provided an insert adaptor for parting off having an adaptor index axis according to independent claim 1.

Previously, only two pockets were known for such adaptors. Increasing the number of pockets around a peripheral surface of an insert adaptor was previously thought disadvantageous for reducing cutting depth compared to known adaptors with two diametrically opposed pockets (due to the limitation caused during usage by the cutting edge width of an insert inside the pocket), and will increase adaptor production costs due to manufacturing of additional pocket(s), it is believed that such disadvantages can be offset by an increased pocket life which thereby increases the overall lifetime of the adaptor.

Yet a further, separate advantage, is that even though production of an insert with three or more cutting edges circumferentially spaced therearound may be simpler than a separate adaptor and insert manufacturing construction (requiring production of the pockets etc.) it has been found that comparatively long cemented carbide inserts require a greater width than metal, particularly steel, thereby increasing the material wastage in parting off operations which require relatively deep cuts. While the cemented carbide is structurally stronger, nonetheless a slightly thinner adaptor can be achieved with metal than cemented carbide, which for certain operations can be advantageous.

It has further been found that when using such insert adaptor with only a single insert only, the previously considered disadvantageous effect of reduced cut length can be eliminated.

In accordance with the subject matter of the present application, the adaptor peripheral surface may be formed with exactly five pockets.

Even though five pockets along an adaptor peripheral surface even further reduces the possible cutting depth, relative to a smaller number of pockets (understanding that for parting off assemblies cutting edges extend wider than the adjacent adaptor portion), nonetheless such number of pockets is believed to be the optimal number for number of cutting edges while still providing chip evacuation space for most applications. Even though it is preferred for all embodiments that pockets are configured to resiliently hold cutting inserts therein, the advantages of a five pocket insert adaptor are believed to even be advantageous in this particular case for inserts (made of a harder material than the insert adaptor itself, e.g. being made of cemented carbide and the insert adaptor being made of steel) which are permanently attached to the insert adaptor (e.g. by brazing). However, as with all ongoing developments, more than five pockets may be feasible, despite the reduced chip evacuation space, such embodiments, however, not falling within the scope of the current invention.

In accordance with the invention, there is provided an insert adaptor for parting off having an adaptor index axis and comprising: parallel adaptor first and second sides connected by an adaptor peripheral surface which extends peripherally around the adaptor; the adaptor index axis extending through the center of the first and second sides; wherein the adaptor peripheral surface is formed with bearing surfaces extending between the pockets.

It will be understood that while an insert adaptor could be formed with many geometric shapes, nonetheless, in particular for parting off applications (in which it is more economical to form as thin a slot as possible to reduce material wastage) it is believed that straight bearing surfaces provide the greatest structural strength for relatively extremely thin adaptors.

In accordance with the invention, there is provided an insert adaptor for parting off having an adaptor index axis and comprising: parallel adaptor first and second sides connected by an adaptor peripheral surface which extends peripherally around the adaptor; the adaptor index axis extending through the center of the first and second sides; wherein the adaptor peripheral surface is formed with the said pockets, each of the pockets optionally comprising an ejection gap at a rear end thereof.

It will be understood that all references to "inserts" in the present application prefer to components which are detachable from an insert adaptor and are not permanently connected thereto (e.g. by brazing).

A further aspect, although not falling within the scope of the current invention, would be the use of (or a method of machining) an insert adaptor according to the invention with only a single insert mounted in a pocket in an operational position and at least the adjacent pockets to said pocket being free of inserts.

There may be provided a tool holder comprising an elongated tool shank (54) and a tool head (56) extending from the tool shank (54) and configured for holding an insert adaptor according to the invention.

The tool holder is a non-rotating tool holder (i.e. not configured for rotation). Thus an adaptor recess can extend along a side of the tool holder, and need not be perpendicular to an elongated direction thereof as with rotating tools.

There may be provided a tool assembly comprising such a tool holder, an insert adaptor according to the invention, and one or more inserts mounted to the insert adaptor.

In accordance with the present application, the tool assembly would comprise a tool holder and an insert adaptor according to the invention and an insert mounted to one of the pockets of the insert adaptor; the insert comprising a cutting edge having a cutting edge thickness measured parallel with the adaptor index axis I_{A;} the insert adaptor comprising an adaptor thickness measured parallel with the adaptor index axis I_{A}, which is smaller than the cutting edge thickness; the insert adaptor being mounted to an adaptor recess of the tool holder.

A method of indexing the tool assembly, which does not fall within the scope of the invention, comprises the steps of loosening a screw holding an insert adaptor to a tool holder, rotating the insert adaptor until a different insert is located in an active cutting position and fastening the screw to thereby bring the insert adaptor to a secure mounted position.

It is understood that the above-said is a summary, and that the following features, either alone or in combination, may be applicable to the tool holder or tool assembly according to claims 1 and 12 respectively:
A. The insert adaptor is formed with pockets along an adapter peripheral surface thereof so that rotation of the insert adaptor about the adaptor index axis brings a different pocket into an operational position.
B. [Deleted]
C. Adaptor first and second sides can be planar. Stated differently, for example, the adaptor first and second sides can be free of projecting bearing surfaces.
D. The adaptor peripheral surface is formed with three to five pockets. Preferably the adaptor peripheral surface is formed with exactly five pockets.
E. Each pocket is configured for resiliently clamping (holding) an insert. Each pocket comprises resilient upper and lower clamp surfaces. It will be understood that the insert adaptors according to the subject matter of the present application are not of the type that have a pocket and screw hole configuration, i.e. that an insert is secured to a pocket with a screw. This is because a screw, or more precisely the screw hole thereof, necessitates a relatively wider insert adaptor which is far less suitable to parting off operations. Accordingly, it will be understood that, except for a screw hole which is part of a fastening configuration, the insert adaptor can be devoid of screw holes. Stated differently, an insert adaptor can be devoid of screw holes associated with pockets. Stated even further differently, each pocket can be devoid of a screw hole.
F. One or each pocket can comprise an ejection gap at a rear end thereof for insert ejection. An ejection gap can be enlarged more than a clamping portion of the pocket preceding it. An ejection gap can have a concave end portion.
G. One or both of the upper and lower clamp surfaces can have a ridge shape. One or both of the upper and lower clamp surfaces can have a crest shape. One of the upper or lower clamp surfaces can have a ridge shape and the other a crest shape. Even though for parting operations side forces are small, such construction may assist insert stabilization. At least one of the upper and lower clamp surfaces can be formed with two contact areas separated by a relief recess. Preferably exactly one of the upper and lower clamp surfaces comprises a relief recess.
H. One or each pocket can be formed with an insert stopper surface, preferably a single insert stopper surface per pocket. The insert stopper surface can be located at a rear end of the pocket. In such case the insert stopper surface can perpendicular to an elongation direction of the pocket or transverse thereto. Alternatively, the insert stopper surface can be located along a periphery of the insert adaptor between a pocket front end and a clamping surface.
I. An adaptor peripheral surface is formed with the plurality of pockets and bearing surfaces extending between the pockets. Each of the bearing surfaces is straight (stated differently, the bearing surfaces extend along a straight path when viewed in a side view, i.e. along a central index axis). Each of the bearing surfaces can be planar. It will be understood that while an insert adaptor could be formed with many geometric shapes, nonetheless, in particular for parting off applications (in which it is more economical to form as thin a slot as possible to reduce material wastage) it is believed that straight bearing surfaces provide the greatest structural strength for relatively extremely thin adaptors.
J. In an operational position, a forward most bearing surface can extend in a direction directly downward from a cutting edge of the operational insert. Stated differently, a forward most bearing surface in an operational position can be essentially perpendicular to an operational direction D_{O}.
K. A bearing surface can comprise a recessed portion located adjacent a pocket, a non-recessed portion, and a transition portion connecting the recessed and non-recessed portion. Stated differently, a bearing surface can extend, essentially straight, from a pocket with a closest portion thereof to the pocket being recessed.
L. An insert adaptor can have a solid construction (stated differently, the insert adaptor can be devoid of elasticity grooves between the pockets). While such grooves are typically advantageous, for the parting off operations envisioned, it is believed a solid insert adaptor construction is preferred, even though this may complicate insertion and removal of an insert from a relatively more rigid pocket. Stated differently, an insert adaptor can have a solid construction excluding the insert pockets and, where such exists, screw hole. To quantify, an insert adaptor can have a material volume of greater than 50% of an imaginary cylinder encompassing the insert adapter. By encompassing, it is meant the smallest cylinder that can encompass the insert adapter. Preferably, said volume is less than 80% of the imaginary cylinder. Most preferably the volume is greater than 55% and less than 75% of the volume of the imaginary cylinder, with values tending to 65% being further preferred (in the example below, the volume is 836mm³ whereas an encompassing cylinder has a volume of 1175mm³ which is a volume ratio of 71%). Such solid construction being, in theory, thought to provide optimal constructional strength. Nonetheless, while the insert adaptor can be devoid of elasticity grooves (which open out to an adaptor peripheral surface) the insert adaptor may have release apertures for ejecting inserts (and still be considered to have the above-mentioned solid construction).
M. An insert adaptor can be formed with a fastening configuration in the center thereof. The fastening configuration can preferably be a single screw hole opening out to the adaptor first and second sides. The single screw hole can be formed in the center of the insert adaptor. The screw hole can be coaxial with the adaptor index axis.
N. An insert adaptor can be formed with a non-central fastening configuration. To elaborate, an insert adaptor can comprise a plurality of screw holes for clamping the insert adaptor to a tool. Stated differently, an insert adaptor can comprise a plurality of screw holes extending through the first and second surfaces. The screw holes can be circumferentially spaced from each other. The spacing can be equal circumferential spacing. There can be a single screw hole for each pocket. The screw hole can also have a dual function as a release aperture.
O. An insert adaptor can comprise a release aperture associated with each pocket.
P. A screw hole can be tapered inwardly from one or both of the adaptor first and second sides. Alternatively, a screw hole can be a simple cylindrical bore. A screw hole can be offset from a corresponding tool hole to bias an insert adaptor in a desired direction.
Q. The insert adaptor can be symmetrical about an adaptor plane bisecting the insert adaptor first and second sides.
R. Inserts configured to be mounted to the insert adaptor can be made of a harder material than the insert adaptor. The insert adaptor is made of metal. The metal can be preferably be steel. An insert can be made of a material harder than the insert adaptor. The insert can preferably be made of cemented carbide.
S. An insert can comprise a cutting edge. An insert can comprise only a single cutting edge. A cutting edge thickness can be greater than the remainder of the insert. A cutting edge thickness can be greater than an adaptor thickness. The cutting edge thickness can be measured parallel with the adaptor index axis; the insert adaptor comprising an adaptor thickness measured parallel with the adaptor index axis, which is smaller than the cutting edge thickness and the insert adaptor is mounted to an adaptor recess of the tool holder. The cutting edge can be the only cutting edge of the tool assembly positioned for operational use. In other words, the tool assembly is configured for successive insert use, rather than multiple insert use simultaneously (i.e. concurrent use). The insert can have an elongate shape.
T. A tool holder can comprise a tool shank and a tool head extending from the tool shank.
U. A tool shank can be elongated. A tool shank can comprise a quadrilateral cross section (preferably square). A tool shank can be formed with a coolant inlet.
V. An operational direction of the tool holder can be parallel with an elongation direction of an elongated shank thereof. An adaptor index axis can be transverse to said elongation direction, preferably perpendicular.
W. A tool head can comprise an adaptor recess configured for receiving an adaptor therein. The adaptor recess can comprise at least one adaptor seating surface protuberance.
X. A tool head can comprise first and second tool bearing surfaces protruding from the tool holder along a periphery of an adaptor recess. The first and second tool bearing surfaces can be the only bearing surfaces of the tool holder. Stated differently, the tool assembly can be configured that the insert adaptor contacts the tool holder only via three regions thereof (e.g., one of the sides of the insert adaptor, and exactly two of the straight bearing surfaces, preferably which are separated by another bearing surface.
Y. At least one of the tool bearing surfaces can be formed with two contact areas separated by a relief recess. Preferably exactly one tool bearing surface comprises a relief recess.
Z. Imaginary tool bearing surface lines extending from the first and second tool bearing surfaces can form an acute tool bearing surface angle. The tool bearing surface angle can preferably be between 25° to 45°. More preferably 30° to 40°. The first and second tool bearing surfaces can be oriented as two non-adjacent sides of an imaginary pentagon.
AA. A tool head can comprise a back-up bearing surface. The back-up bearing surface can be configured to be spaced apart from an insert adaptor mounted to the tool holder under normal circumstances. Stated differently, the tool assembly is designed with a gap between the insert adaptor and the back-up bearing surface. Only under undesired movement of the insert adaptor would the back-up bearing surface abut the insert adaptor and prevent movement thereof. The back-up bearing surface can be oriented as a side of an imaginary pentagon, positioned between the first and second tool bearing surfaces which constituted additional sides thereof.
BB. A tool head can comprise a tool hole or a plurality of tool holes. The tool hole can be threaded. The tool hole(s) can be non-coaxial (stated differently, off-center) with a screw hole of an insert adaptor to bias the adaptor in a direction when fastened to the tool holder. The direction can be towards a back-up bearing surface.
CC. A tool assembly can comprise a tool holder, an insert adaptor and one or more inserts mounted to the insert adaptor.
DD. A tool assembly can comprise one or more screws for securing the insert adaptor to the tool holder.
EE.A screw can comprise a head portion and a threaded shank portion.
FF. A shank portion can have a shank length at least three times greater than an adaptor thickness of an insert adaptor. Preferably at least five times greater. Such length can allow the insert adaptor to remain connected to a tool holder during indexing, reducing the likelihood of falling parts.
GG. A screw, when the tool assembly is in an operational assembled configuration, can project further than an insert adaptor away from an adaptor recess. It will be understood that if the screw or other fastening configuration would be flush with the insert adaptor, a greater cutting depth could be achieved. Nonetheless, to compensate for a relatively low structural strength of a comparatively thin metal insert adaptor, such non-flush configuration can be used. It will also be understood that the subject matter of the present application can provide a particularly advantageous solution for insert adaptors having an adaptor thickness of less than 3.5mm, preferably less than 3mm and most preferably 2mm or less. Similarly, it will also be understood that the subject matter of the present application can provide a particularly advantageous solution for insert adaptors having a circumscribing circle with an adaptor circumscribing diameter D_{AC} greater than 30mm, preferably greater than 35mm. Additionally, it is preferred that the adaptor circumscribing diameter is less than 50mm, preferably less than 42mm.
HH. A shank portion can comprise a threaded sub-portion and a threadless sub-portion located between the threaded sub-portion and the head portion. Such screw construction can advantageously provide a non-threaded area for an insert adaptor to rotate thereabout during indexing. The threadless sub-portion can preferably have a smaller diameter than the threaded sub-portion. The threadless sub-portion can have a shank length L_{S3} (called below "third shank length") which is measured along the threadless sub-portion 76 and which is greater than an adaptor thickness. Preferably said shank length L_{S3} can be less than 3 times the adaptor thickness. Each of the constructional features above can further assist user-friendly indexing of the insert adaptor thereabout.
II. A shank portion can comprise a tool-receiving configuration (e.g. a torx^{®} socket). This can allow, when the screw hole extends to both sides of a tool holder, for a user to rotate the screw even from a side of the tool holder opposite the side to which the insert adaptor is clamped.
JJ. A head portion can have a frustoconical shape to reduce projection of the head portion from the tool assembly, allowing a more compact construction. The frustoconical shape can extend to a larger diameter than the shank portion.
KK. A head portion can comprise a tool-receiving configuration.
LL.A coolant channel can extend underneath an adaptor recess.
MM. A coolant channel outlet can open out at a forward most portion of an adaptor recess.
NN. A coolant channel outlet can be aligned with an insert adaptor. Stated differently, the coolant channel outlet can be aligned with an adaptor plane of the insert adaptor.
OO. A method can further comprise the step of replacing one or more worn inserts with different inserts.
PP. Method steps of loosening and fastening the screw can be further defined as loosening and fastening a single screw. Stated differently, a tool assembly can comprise a single screw only for fastening the insert adaptor to the tool holder. Even though a single screw provides less stability than a plurality of screws, it is believed that the advantage of userability (only having to unscrew a single screw, or even only having to partially unscrew a single screw - leaving the screw connected to the tool holder) outweighs the advantage of a more stable mounting construction. This is believed to be also assisted, although not essentially, by the straight bearing surface arrangement described, which provides comparatively strong mounting stability. It will be further noted that if a fastening configuration comprises more than one screw holding the insert adaptor to the tool holder, then indexing of an insert adaptor without removing at least one of the screws may be impossible.
QQ. A method can further comprise loosening the screw such that it is not completely removed from the tool holder, distancing the insert adaptor from the tool holder such that the bearing surfaces of the insert adaptor and tool holder are no longer aligned and then carrying out said rotating of the insert adaptor.
RR. Method steps of loosening and fastening the screw can be further defined as loosening and fastening a single screw via a tool-receiving configuration in a shank portion of a screw.

### BRIEF DESCRIPTION OF THE DRAWINGS

For a better understanding of the subject matter of the present application, and to show how the same may be carried out in practice, reference will now be made to the accompanying drawings, in which:
Fig. 1A is a side view of a portion of a cutting tool assembly;
Fig. 1B is an upper view of the portion of the cutting tool assembly in Fig. 1A;
Fig. 1C is a front view of the portion of the cutting tool assembly in Figs. 1A and 1B;
Fig. 2A is an upper view an insert adaptor of the cutting tool assembly in Figs. 1A to 1C, and a single insert held in a pocket of the insert adaptor;
Fig. 2B is a side view of the insert adaptor in Fig. 2A;
Fig. 2C is an enlarged front view of a portion of the insert adaptor in Fig. 2A, including a pocket thereof;
Fig. 2D is an enlarged side view of the portion of the insert adaptor in Fig. 2C, including a pocket thereof;
Fig. 2E is an enlarged side view of an alternative pocket of an insert adaptor;
Fig. 2F is an enlarged side view of a yet another alternative pocket of an insert adaptor;
Fig. 3A is a side view of a tool holder of the cutting tool assembly in Figs. 1A to 1C;
Fig. 3B is an upper view of the tool holder in Fig. 3A;
Fig. 3C is a front view of the tool holder in Figs. 3A and 3B;
Fig. 4 is a cross section view taken along line IV- IV in Fig. 3B;
Fig. 5 is a partially sectioned schematic side view of a screw of the cutting tool assembly in Figs. 1A to 1C;
Fig. 6A is a side view of a portion of an alternative cutting tool assembly;
Fig. 6B is an upper view of the portion of the cutting tool assembly in Fig. 6A;
Fig. 6C is a front view of the portion of the cutting tool assembly in Figs. 6A and 6B;
Fig. 7A is an upper view of an insert adaptor of the cutting tool assembly in Figs. 6A to 6C, and a single insert held in a pocket of the insert adaptor;
Fig. 7B is a side view of the insert adaptor and insert in Fig. 7A;
Fig. 8A is a side view of a tool holder of the cutting tool assembly in Figs. 6A to 6C;
Fig. 8B is an upper view of the tool holder in Fig. 8A; and
Fig. 8C is a front view of the tool holder in Figs. 8A and 8B.

### DETAILED DESCRIPTION

Reference is made to Figs. 1A and 1B, illustrating a tool assembly 10 configured for parting off operations.

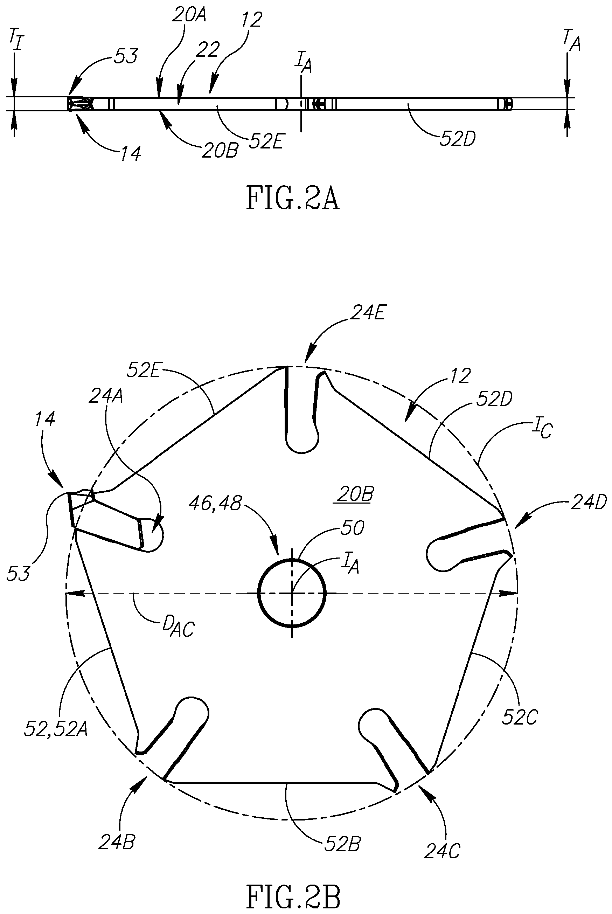

The tool assembly 10 can comprise an insert adaptor 12, an insert 14 (Fig. 2B; such insert designation may additionally or alternatively be designated with a suffix e.g., first, second, third, fourth and fifth pockets 14A, 14B, 14C, 14D, 14E; further designations below are also made in such manner) mounted to the insert adaptor 12, a tool holder 16, and a screw 18 used to secure the insert adaptor 12 to the tool holder 16.

Referring now also to Figs. 2A and 2B, the insert adaptor 12 can comprise parallel adaptor first and second sides 20A, 20B connected by an adaptor peripheral surface 22, and can have an adaptor index axis I_{A} extending through the center of the adaptor first and second sides 20A, 20B.

The adaptor peripheral surface 22 is formed with pockets 24 (also suffixed, e.g., first, second, third, fourth and fifth pockets 24A, 24B, 24C, 24D, 24E). The pockets 24 can preferably be equally circumferentially spaced about the adaptor index axis I_{A}.

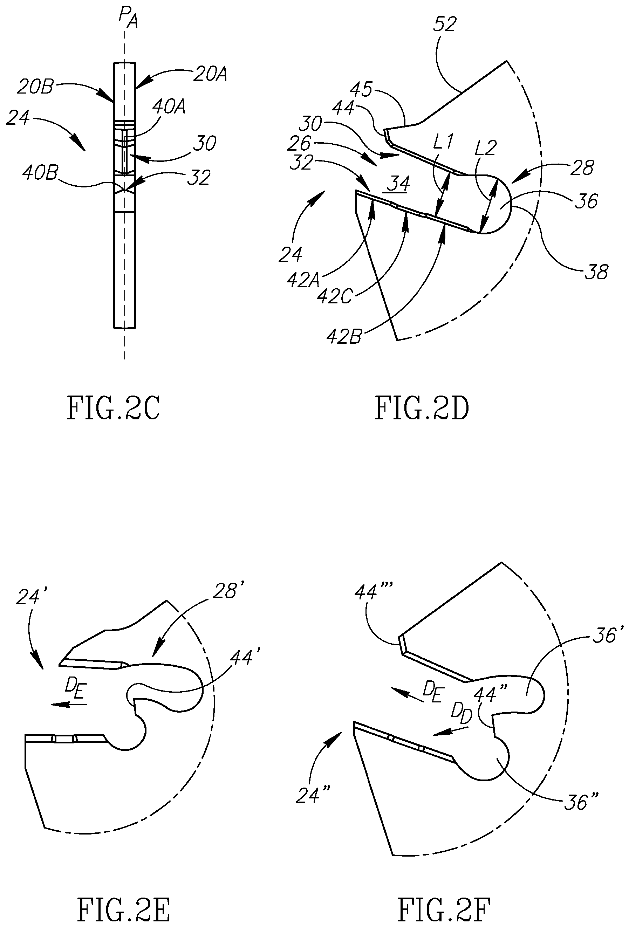

Preferably, each of the pockets 24, as shown in the present example, are identical, and, for the sake of succinctness only, a generic pocket designated "24" shown in Figs. 2C and 2D will be described in detail.

The pocket 24 can open out to a front end 26, and can further comprise a rear end 28, and opposing upper and lower clamp surfaces 30, 32 extending between the front and rear ends 26, 28.

A clamping gap 34 can be defined between the upper and lower clamp surfaces 30, 32.

An ejection gap 36 can be defined between the clamping gap 34 and the rear end 28, and in the present example the pocket 24 comprises a single concave end portion 38 at the rearmost end thereof.

In Fig. 2C, it is shown that both the upper and lower clamp surfaces 30, 32 have a ridge shape, i.e. a convex shape each of which preferably have an apex 40A, 40B aligned with an adaptor plane P_{A} (Fig. 2C) bisecting the first and second sides 20A, 20B. It will be understood that the opposite shape, i.e. a crest shape, is also one of other possibilities.

In the side view of Fig. 2D, it is shown that one of the clamp surfaces, in this example the upper clamp surface 30 is straight (stated differently, follows a linear path in a side view such as that shown). Whereas the other clamp surface, in this example the lower clamp surface 32 comprises two contact areas 42A, 42B separated by a relief recess 42C, for more secure mounting of the insert 14 (not shown in Fig. 2D).

The ejection gap 36 can also constitute a relief portion, by being further enlarged than the clamping gap 34. More precisely, the enlargement referred to is that shown in a side view (Fig. 2D) in that a minimum first distance L₁ between, and perpendicular to, the upper and lower clamp surfaces 30, 32 is smaller than a parallel minimum second distance L₂ of the ejection gap 36 to the first distance L₁.

The pocket 24 can further be formed with an insert stopper surface 44. In Fig. 2D the insert stopper surface 44 is located along the periphery of the insert adaptor 12 between the front end 26 and the upper clamp surface 30. The insert stopper surface 44 is transverse, although not necessarily perpendicular to the upper clamp surface 30. An intermediary surface 45 may or may not be present between the insert stopper surface 44 and a bearing surface 52 adjacent thereto (see for comparison, e.g. Fig. 2F).

In Fig. 2E an alternative insert stopper surface 44' is exemplified as located at a rear end 28' of a pocket 24'. The insert stopper surface 44' being essentially perpendicular to an elongation direction D_{E} of the pocket 24". However, as shown in Fig. 2F, even an insert stopper surface 44" is located at a rear end 28" of a pocket 24" need not be perpendicular to an elongation direction D_{E} of the pocket 24" (in this case directed slightly downward along direction D_{D}). To accommodate different insert shapes, a pocket 24" may include an additional insert stopper surface 44‴. In some embodiments, there may be two ejection or relief gaps 36', 36".

Reverting to Figs. 2A and 2B, to facilitate fastening of the insert adaptor 12 to the tool holder 16, the insert adaptor 12 can be formed with a fastening configuration 46 in the center thereof. Preferably, the fastening configuration 46 is a single screw hole 48 opening out to the first and second sides 20A, 20B. The screw hole 48 can comprise a taper portion 50 tapering inwardly from the first and second sides 20A, 20B.

The adaptor peripheral surface 22 can be formed with a straight bearing surfaces 52 (also suffixed, e.g., first, second, third, fourth and fifth pockets bearing surfaces 52A, 52B, 52C, 52D, 52E), i.e. in a side view (e.g. Fig. 2B) extending between the pockets 24. Preferably, the bearing surfaces 52 can also be planar. The bearing surfaces 52 are in the present example preferably arranged to form a basic pentagonal shape.

As noted above, the insert adaptor 12 can have a particularly solid construction excluding the insert pockets 24 and the screw hole 48. To quantify an imaginary circle I_{C} (Fig. 2B) can be extended to an imaginary cylinder with an insert adaptor thickness T_{A} (Fig. 2A) which encompasses the insert adaptor 12. The insert adaptor 12 can preferably have a material volume of greater than 50% of a volume of said imaginary cylinder.

The imaginary circle I_{C} can further define an adaptor circumscribing diameter D_{AC}.

As also shown in Fig. 2A, the insert 14 comprises a single cutting edge 53 having a cutting edge thickness T_{I}, measured parallel with the adaptor index axis I_{A}, which is greater than the remainder of the insert 14, when measured parallel with the adaptor index axis I_{A}. The cutting edge thickness T_{I} is greater than an adaptor thickness T_{A}, measured parallel with the adaptor index axis I_{A}, as required for parting off operations. The insert 14 can have an elongate shape as shown in Fig. 2B.

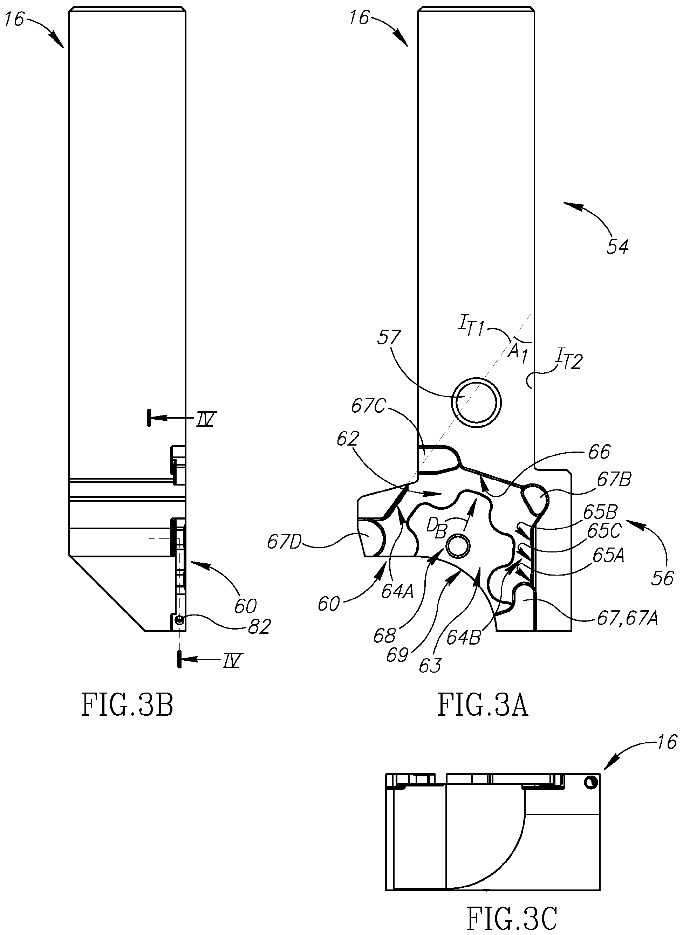

Referring to Figs. 3A to 3C, the tool holder 16 can comprise an elongated tool shank 54 and a tool head 56 extending therefrom.

The tool shank 54 can preferably be formed with a coolant inlet 57 that can be optionally closed with a plug 58 (Fig. 1A) when not in use.

The tool head 56 can comprise an adaptor recess 60 configured for receiving the insert adaptor 12 therein. The adaptor recess 60 can comprise at least one adaptor seating surface protuberance 62 which protrudes further than a remainder 63 of the adaptor recess 60 for stable contact with one of the insert adaptor's first and second sides 20A, 20B.

The tool head 56 can further comprise first and second tool bearing surfaces 64A, 64B protruding from the tool holder 16 along a periphery of an adaptor recess 60.

In the side view of Fig. 3A, it is shown that the first tool bearing surface 64A can be straight (stated differently, follows a linear path). Whereas the other clamp surface, in this example the second tool bearing surface 64B comprises two contact areas 65A, 65B separated by a relief recess 65C, for more secure mounting of the insert adaptor 12.

Imaginary tool bearing surface lines I_{T1}, I_{T2} extending from the first and second tool bearing surfaces 64A, 64B can form an acute tool bearing surface angle A₁.

The tool head 56 can further comprise a back-up bearing surface 66.

At each end of the of the first and second tool bearing surfaces 64A, 64B and the back-up bearing surface 66, relief portions 67 (also suffixed, e.g., first, second, third, fourth relief portions 67A, 67B, 67C, 67D) are formed to provide a gap between the second, third, fourth and fifth inserts 14B, 14C, 14D, 14E (or more precisely the cutting edges thereof) and the tool head 56.

The tool head 56 can further comprise a tool hole 68. The tool hole 68 can be internally threaded and also a through-hole (i.e. extending completely through the tool head 56). Preferably, the tool hole 68 can be configured to bias the insert adaptor 12 in a biasing direction D_{B} towards the back-up bearing surface 66 for particularly strong clamping.

Referring to Fig. 1B, a recessed tool head front surface 69, which is preferably concave, can facilitate cutting depth. It will be understood that the cutting depth in this particular example extends to the first cutting depth D_{C1} limited by the screw 18 projecting from the insert adaptor 12, but could potentially, in other embodiments, extend to a second cutting depth D_{C2} corresponding to a length to a rearmost portion of the tool head front surface 69.

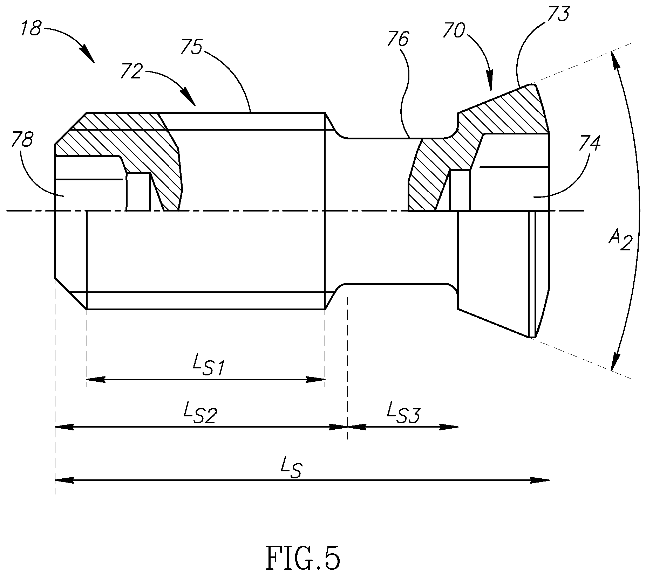

Referring to Fig. 5, the screw 18 which has optionally preferred features is shown.

The screw 18 comprises a head portion 70 and a threaded shank portion 72, and can have an overall screw length L_{S}.

The head portion 70 can have a frustoconical shape as shown to reduce projection shown in Fig. 1B, and can comprise a tool-receiving configuration 74.

A frustoconical surface 73 of the head portion 70 can form an angle A₂ of 45° ± 5°.

The shank portion 72 can comprise a threaded sub-portion 75 and a threadless sub-portion 76.

The shank portion 72 can have a shank length L_{S1} at least three times greater than an adaptor thickness A_{T} of the insert adaptor. Preferred values being recited above. It will be clarified that the shank length L_{S1} referred to only the part of the shank portion 72 comprising threading (for gripping the tool holder 16), and does not include non-threaded portions as exemplified by a second shank length L_{S2}, or a third shank length L_{S3} which is measured along the threadless sub-portion 76.

The shank portion 72 can further comprise a tool-receiving configuration 78.

Referring to Fig. 4, a coolant channel 80 originating from the coolant inlet 57 (Fig. 3A) can extend under the adaptor recess 60. In order to achieve flow to a narrow slit region during a parting off operation, the coolant channel 80 can open out at a coolant outlet 82 (see also Figs. 1B and 3B) aligned with and directly underneath a forwardmost portion of the adaptor recess 60, and directed to an active cutting edge (Fig. 1B). The coolant channel 80, in other words, requires a curved path to achieve the desired coolant outlet 82 position. Preferably there is only a single coolant outlet 82. As shown, the coolant channel 80 can, using traditional channel forming methods such as drilling, comprise a number of straight coolant channel sections 84A, 84B, 84C, 84D. Although, under more recent additive manufacturing methods, the coolant channel 80 could be formed with one or more curved sections (not shown).

To further detail operation: one, or preferably each of the pockets 24 can have an insert 14 mounted thereto before the insert adaptor 12 is in the clamped position shown in Figs. 1A to 1C (preferably the inserts 14 are mounted while the insert adaptor 12 is not mounted at all to the tool holder 16).

The insert 14 can be mounted to the pocket 24 by sliding it from the front end 26 of the pocket 24 towards the rear end 28 thereof which forces the opposing upper and lower clamp surfaces 30, 32 to slightly separate, with the elasticity of the insert adaptor 12 causing them to resiliently clamp the insert 14 therebetween (notably the insert 14 is configured to preferably contact only the upper clamp surface 30 and the two contact areas 42A, 42B of the lower clamp surface 32).

A tool, such as a soft face hammer (not shown) would typically be used for mounting. The pockets 24 may have a relative rigidity for resilient type pockets in view of the insert adaptor 12 preferably being free of elasticity grooves, which are omitted in preferred embodiments order to maintain sufficient insert adaptor constructional strength for ultra-thin parting off operations.

Thereafter, the insert adaptor 12 can be clamped to the tool holder 16 via fastening of the screw 18. In an operational position the insert adaptor 12 contacts the tool holder 16 only via the first side 20A and exactly two of the straight bearing surfaces (e.g. the second and fourth bearing surface 52B, 52D. Notably, a gap 86 is typically designed between the insert adaptor 12 and the back-up bearing surface 66.

In Figs. 1A to 1C, only the first insert 14A is in an operational position to part-off a workpiece (not shown) typically by the tool assembly 10 being moved in the operational direction D_{O} shown.

After the first insert 14A is worn, either it can be replaced by being ejected (e.g. a portion of an ejection tool (not shown) can be inserted through the ejection gap 34 to eject the first insert 14A by a step of levering the ejection tool against the rear end 28, and a different insert which is not shown can be inserted as described above) or by indexing of the insert adaptor 12, until each of the inserts 14 are successively worn and then all replaced.

The insert adaptor 12 can be either removed completely for indexing or preferably a step of loosening the screw 18 (via either of the receiving configurations 74, 78) while maintaining partial attachment of the screw 18 to the tool head 56 is carried out. Subsequent to such loosening, the insert adaptor 12 is moved away from the tool head 56 such that it can be rotated without contacting the first and second tool bearing surfaces 64A, 64B and rotated to bring an adjacent insert 14 into an operative position. Subsequently, the insert adaptor 12 is moved back into contact with the tool head 56 and clamped via fastening of the screw 18. Such indexing being user friendly due to the extremely low likelihood of falling parts.

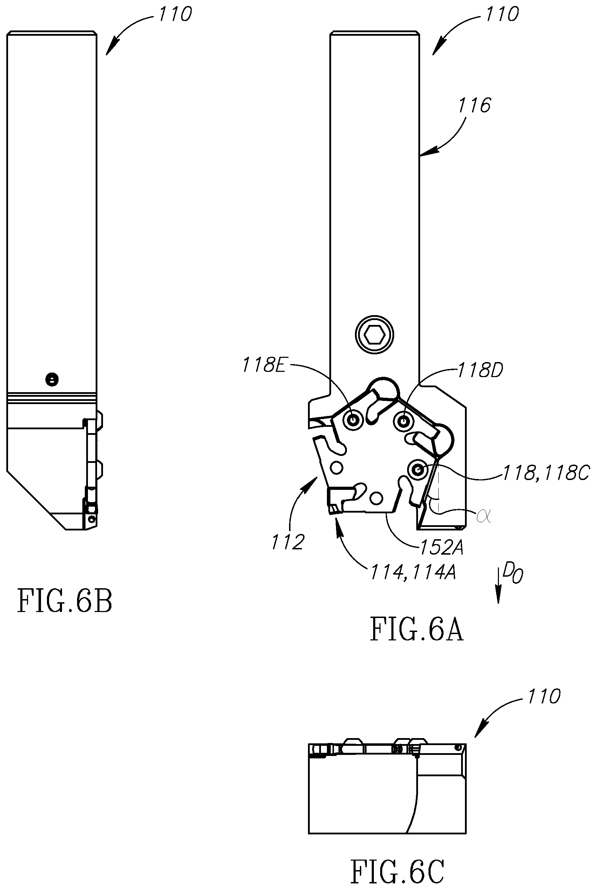

Reference is made to Figs. 6A to 8C, an alternative tool assembly 110 is shown comprising of an insert adaptor 112, an insert 114 and a tool holder 116. Reference numerals for corresponding elements have been shifted by a value of "100".

The alternative tool assembly 110 is essentially similar to the previously described tool assembly 10, except for three notable differences. The first notable difference is the use of non-centrally located screw(s) 118 (and screw hole(s) 137) to hold the insert adaptor 112 to the tool holder 116. The second notable difference is that the screw holes 137 are not tapered but are simple cylindrical bores. The third is the location of the operational insert 114 relative to the orientation of the bearing surfaces 152.

Clearly there is also a different insert type and pocket, however, aside from described differences or clearly visible differences such as the insert type, it should be assumed that all the other functional features described above, as well the present notable differences, are applicable to any embodiment of the present invention. The focus on the description below will focus on the notable or visible differences, and undescribed portions can be assumed to correspond to those exemplified above.

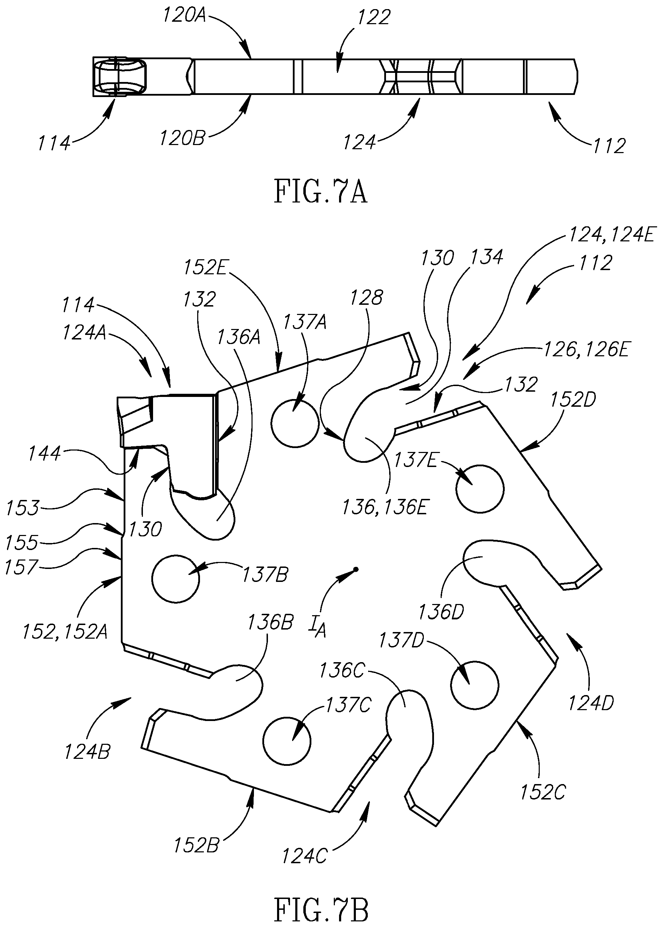

Referring now also to Figs. 7A and 7B, the insert adaptor 112 comprises parallel adaptor first and second sides 120A, 120B connected by an adaptor peripheral surface 122, and has an adaptor index axis I_{A} extending through the center of the adaptor first and second sides 120A, 120B.

The adaptor peripheral surface 122 is formed with pockets 124 (also suffixed, e.g., first, second, third, fourth and fifth pockets 124A, 124B, 124C, 124D, 124E). It will be understood that each insert 114 (only one insert being shown, however clearly there can be several simultaneously mounted) and pocket 124 in the present example are identical and hence explanation will be limited to a single example thereof.

Using the fifth pocket 124E for explanation, it opens out to a front end 126, and can comprise a rear end 128, and opposing upper and lower clamp surfaces 130, 132 extending between the front and rear ends 126, 128.

A clamping gap 134 can be defined between the upper and lower clamp surfaces 30, 32.

An ejection gap 136E (also suffixed, e.g., first, second, third, fourth and fifth ejection gaps 136A, 136B, 136C, 136D, 136E) can be defined between the clamping gap 134 and the rear end 128.

Each ejection gap 136 can be accompanied by a release aperture 137 (also suffixed, e.g., first, second, third, fourth and fifth release apertures 137A, 137B, 137C, 137D, 137E). The fifth release aperture 137E being functionally connected to the fifth pocket 124E and fifth ejection gap 136E thereof.

As is known in the art, a tool with two projections (not shown) can be inserted into both the fifth ejection gap 136E and the fifth release aperture 137E to eject an insert 114 (not shown in the fifth pocket 124E but rather in the first pocket 124A).

Notably, as the release aperture 137 does not open out to the adapter peripheral surface 122 it does not weaken the insert adaptor 112 to the extent that an elasticity groove (not shown) would.

Now referring to the first pocket 124A, it can further be formed with an insert stopper surface 144. The insert stopper surface 144 is located along the periphery of the insert adaptor 112 adjacent the front end 126 and the upper clamp surface 130.

The insert adaptor 112 can be formed with a fastening configuration 146 which, differing to the previous example, is not in the center thereof. To elaborate, the fastening configuration 146 comprises one or more screw holes which in the present non-limiting example also have the dual function of being the release apertures 137.

In the present example, in the operational position shown in Fig. 6A, there are three release apertures 137C, 137D, 137E (Fig. 7B) that function as screw holes when the insert 114 is in pocket 124A. Stated generally, the screw holes furthest from the insert 114 are used to maximize cutting depth obtainable.

The benefits of using a central fastening configuration 46 are mentioned above, for example, ease of indexability of the insert adaptor 12, fewer components, less manufacturing related to components, greater ease to produce a smaller adaptor 12. By contrast, the benefits of one or more non-centrally located screw holes (stated differently, circumferentially located screw holes) as exemplified here is that greater cutting depth is possible (the previous example being limited to the center of the adaptor due to the presence of the protruding screw).

Initially it was believed that the benefits of a single central fastening configuration 46 were superior. However, surprising benefits have also been found for the alternate arrangement. Since the inserts 114 (noting the particular insert shape is not important to this advantage) are easily ejected and replaced multiple times before the pocket 124 wears out, the detriment of completely removing all three screws 118 (e.g. Fig. 6A, also suffixed 118C, 118D, 118E) in order to index the insert adaptor 112, is far less detrimental than for other designs (e.g. a single pentagonal insert with integral multiple edges spaced along the periphery thereof).

Thus the previously considered modest advantage of a slightly greater cut depth is not as significantly disadvantaged by multiple screws as was initially believed, further increasing the cost effectiveness of such insert adaptors.

In the present example the screw holes 137 are not tapered, nor are the screw holes 137 offset with the tool holder's tool holes 168 (also suffixed 168C, 168D, 168E). Stated differently, in the present example the screw holes 137 are simple cylindrical bores. Surprisingly, it has been found that even without the tapering and/or offset exemplified in the previous embodiment, which assists in biasing an insert adaptor onto a tool holder, appropriate clamping of the insert adaptor to a tool holder has been achieved. This is by far the simplest design, however certainly the option remains to taper and/or offset the screw holes (as in the previous example) to provide a biasing effect. All three options being feasible for any embodiment of the present invention.

It is also theoretically possible for an insert adaptor to comprise both screw holes and release apertures, or merely screw holes (depending on the method of insert removal) however, in embodiments where both release apertures and screw holes are used, it is clearly advantageous in terms of structural strength and production to have a combined function.

The adaptor peripheral surface 122 can be formed with a straight bearing surfaces 152 (also suffixed, e.g. first, second, third, fourth and fifth bearing surfaces 152A, 152B, 152C, 152D, 152E), i.e. in a side view (e.g. Fig. 2B) extending between the pockets 24.

One of the notable differences mentioned above is the location of the operational insert 114 relative to the orientation of the bearing surfaces 152 (specifically the first bearing surface 152A directly below the insert 114). As will be best understood from Fig. 6A, the first bearing surface 152A extends directly underneath the insert 114. Stated differently the first bearing surface 152A in an operational position is essentially perpendicular to the operational direction D_{O}. To elaborate, by comparison, in the previous example the bearing surface 52B was essentially parallel with the operational direction Do, whereas it can be seen that in the present example the corresponding lower bearing surface forms an acute lower surface bearing angle α the operational direction D_{O}. The angle α is preferably fulfills the condition: 5° < α < 25°, more preferably 10° < α < 20° and most preferably 13° < α < 19°.

It will be understood that such orientation provides better support underneath an insert. This is achieved by rotating the bearing surfaces 152 relative to the pocket 124 positions (relative to the previous example). This advantageous rotation can also optionally be incorporated for other insert types such as that shown in the previous example. However, for the angled insert type shown in the present figures such orientation is believed necessary.

A further improvement in the bearing surface 152 is that it can comprise an optional but preferred recessed portion 153 directly adjacent the insert 114. The bearing surface 152 can thus comprise a recessed portion 153, a transition portion 155 and a non-recessed portion 157.

By not having an entirely straight bearing surface 152, but including a recessed portion 153, any deformation caused by the insert 114 (caused by impacts during machining) more significantly affects the recessed portion 153 rather than the non-recessed portion 157. Thus no deformation or at least less deformation occurs in the non-recessed portion 157 used for abutment with the tool holder 116. Clearly, this feature can be beneficially incorporated into any embodiment.

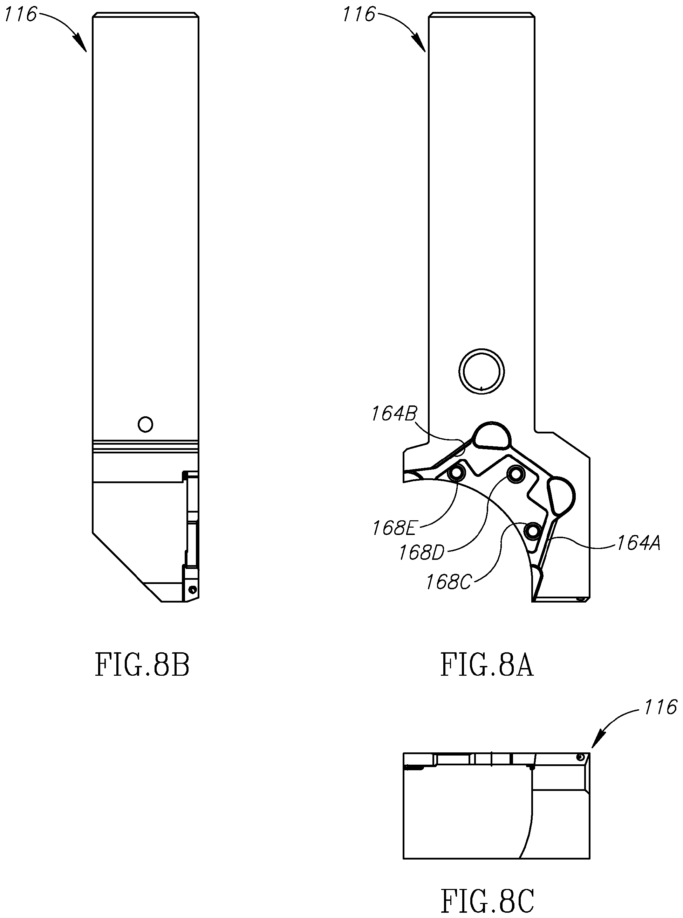

Referring to Figs. 8A to 8C, the tool holder 116 is generally similar, the notable difference being the three tool holes tool holes 168 and the rotated tool bearing surfaces 164A, 164B which are configured to contact the non-recessed portions 157 of each bearing surface 152. The remaining features are generally similar to the previous example.

The description above includes exemplary embodiments and details for enablement, if needed, of claimed subject matter, and does not exclude non-exemplified embodiments and details from the claim scope of the present application.

## Claims

1. An insert adaptor (12) for parting off having an adaptor index axis (I_{A}) and comprising:
parallel adaptor first and second sides (20A, 20B) connected by an adaptor peripheral surface (22) which extends peripherally around the insert adaptor (12);
the adaptor index axis (I_{A}) extending through the center of the first and second sides (20A, 20B); **characterized in that**
the adaptor peripheral surface is formed with three to five pockets (24A, 24B, 24C, 24D, 24E) and bearing surfaces (52) extending between the pockets (24A, 24B, 24C, 24D, 24E);
each of the pockets (24A, 24B, 24C, 24D, 24E) is configured for resilient clamping and comprises resilient upper and lower clamp surfaces (30, 32);
in a side view of the insert adaptor (12), the bearing surfaces (52) are straight bearing surfaces extending between the pockets (24A, 24B, 24C, 24D, 24E); and
the pockets (24A, 24B, 24C, 24D, 24E) are equally circumferentially spaced about the adaptor peripheral surface (22),
wherein the insert adaptor is made of metal.

2. The insert adaptor (12) according to claim 1, wherein, in a side view of the insert adaptor (12), each straight bearing surface (52) comprises a recessed portion (153) located adjacent to one of the pockets (24A, 24B, 24C, 24D, 24E), a non-recessed portion (157), and a transition portion (155) connecting the recessed and non-recessed portion.

3. The insert adaptor (12) according to claim 1 or 2, wherein the adaptor first and second sides (20A, 20B) are planar.

4. The insert adaptor (12) according to any one of claims 1 to 3, wherein both of the upper and lower clamp surfaces (30, 32) has a ridge shape.

5. The insert adaptor (12) according to any one of claims 1 to 4, further being formed with a solid construction.

6. The insert adaptor (12) according to any one of claims 1 to5, wherein the insert adaptor (12) has a material volume of greater than 50% of an imaginary cylinder encompassing the insert adaptor (12), preferably said volume is greater than 55% and less than 75% of the volume of the imaginary cylinder.

7. The insert adaptor (12) according to any one of claims 1 to 6, further being formed with a single central screw hole (48) opening out to the adaptor first and second sides (20A, 20B).

8. The insert adaptor (12) according to any one of claims 1 to 6, further being formed with a plurality of equally circumferentially spaced screw holes (137) opening out to the adaptor first and second sides (20A, 20B).

9. The insert adaptor (12) according to claim 8, wherein the number of screw holes (137) is equal to the number of the pockets (24A, 24B, 24C, 24D, 24E) of the insert adaptor (12).

10. The insert adaptor (12) according to any one of claims 1 to 9, wherein the insert adaptor (12) is symmetrical about an adaptor plane (P_{A}) bisecting the insert adaptor first and second sides (20A, 20B).

11. The insert adaptor (12) according to any one of claims 1 to 10, wherein the bearing surfaces (52) are planar.

12. A tool assembly (10) comprising a tool holder (16), an insert adaptor (12) according to any one of claims 1 to 11 mounted to the tool holder (16), and an insert (14) mounted to one of the pockets (24A, 24B, 24C, 24D, 24E) of the insert adaptor (12); the insert (14) comprising a cutting edge (53) which is the only cutting edge of the tool assembly positioned for operational use, the cutting edge having a cutting edge thickness (T₁) measured parallel with the adaptor index axis (I_{A}); the insert adaptor (12) comprising an adaptor thickness (T_{A}) measured parallel with the adaptor index axis (I_{A}), which is smaller than the cutting edge thickness (T₁);
the tool holder (16) comprising an elongated tool shank (54) and a tool head (56) extending from the tool shank (54);
the tool head (56) comprising first and second tool bearing surfaces (64A, 64B) protruding from the tool holder (16) along a periphery of an adaptor recess (60); and
the insert adaptor (12) being mounted to the adaptor recess (60) of the tool holder (16).

13. The tool assembly (10) according to claim 12, wherein, in an operational position, an operational direction (Do) of the tool holder (16) is parallel with an elongation direction of the elongated tool shank, and a forward most bearing surface (52) extends essentially perpendicular to an operational direction (Do).

14. The tool assembly (10) according to claim 12 or 13, wherein said adaptor recess (60) comprises at least one adaptor seating surface protuberance (62).

15. The tool assembly (10) according to any one of claims 12 to 14, wherein the first and second tool bearing surfaces (64A, 64B) are the only tool bearing surfaces of the tool holder (16), such that the insert adaptor (12) contacts the tool holder (16) only via three regions thereof, namely one of the first and second sides (20A, 20B) of the insert adaptor (12), and exactly two straight bearing surfaces (52).

16. The tool assembly (10) according to any one of claims 12 to 15, wherein said tool head comprises a concave recessed tool head front surface (69).

## Patentansprüche

1. Einsatzadapter (12) zum Abstechen, der eine Adapterindexachse (I_{A}) hat und aufweist:
eine erste und eine dazu parallele zweite Adapterseite (20A, 20B), die durch eine Adapterumfangsfläche (22) verbunden sind, die sich am Umfang um den Einsatzadapter (12) herum erstreckt;
wobei sich die Adapterindexachse (I_{A}) durch die Mitte der ersten und zweiten Seite (20A, 20B) erstreckt; **dadurch gekennzeichnet, dass**
die Adapterumfangsfläche mit drei bis fünf Taschen (24A, 24B, 24C, 24D, 24E) und sich zwischen den Taschen (24A, 24B, 24C, 24D, 24E) erstreckenden Auflageflächen (52) ausgebildet ist;
jede der Taschen (24A, 24B, 24C, 24D, 24E) zum elastischen Klemmen konfiguriert ist und eine elastische obere und untere Klemmfläche (30, 32) aufweist;
in einer Seitenansicht des Einsatzadapters (12) die Auflageflächen (52) gerade Auflageflächen sind, die sich zwischen den Taschen (24A, 24B, 24C, 24D, 24E) erstrecken; und
die Taschen (24A, 24B, 24C, 24D, 24E) um die Adapterumfangsfläche (22) gleichmäßig über den Umfang beabstandet sind,
wobei der Einsatzadapter aus Metall hergestellt ist.

2. Einsatzadapter (12) nach Anspruch 1, wobei in einer Seitenansicht des Einsatzadapters (12) jede gerade Auflagefläche (52) aufweist: einen ausgesparten Abschnitt (153), der benachbart zu einer der Taschen (24A, 24B, 24C, 24D, 24E) liegt, einen nicht ausgesparten Abschnitt (157) und einen Übergangsabschnitt (155), der den ausgesparten und nicht ausgesparten Abschnitt verbindet.

3. Einsatzadapter (12) nach Anspruch 1 oder 2, wobei die erste und zweite Adapterseite (20A, 20B) eben sind.

4. Einsatzadapter (12) nach einem der Ansprüche 1 bis 3, wobei sowohl die obere als auch die untere Klemmfläche (30, 32) eine Gratform haben.

5. Einsatzadapter (12) nach einem der Ansprüche 1 bis 4, der ferner mit einem massiven Aufbau ausgebildet ist.

6. Einsatzadapter (12) nach einem der Ansprüche 1 bis 5, wobei der Einsatzadapter (12) ein Materialvolumen über 50 % eines gedachten Zylinders hat, der den Einsatzadapter (12) umschließt, und vorzugsweise das Volumen über 55 % und unter 75 % des Volumens des gedachten Zylinders beträgt.

7. Einsatzadapter (12) nach einem der Ansprüche 1 bis 6, der ferner mit einem einzelnen mittigen Schraubenloch (48) ausgebildet ist, das in der ersten und zweiten Adapterseite (20A, 20B) mündet.

8. Einsatzadapter (12) nach einem der Ansprüche 1 bis 6, der ferner mit mehreren gleichmäßig über den Umfang beabstandeten Schraubenlöchern (137) ausgebildet ist, die in der ersten und zweiten Adapterseite (20A, 20B) münden.

9. Einsatzadapter (12) nach Anspruch 8, wobei die Anzahl von Schraubenlöchern (137) gleich der Anzahl der Taschen (24A, 24B, 24C, 24D, 24E) des Einsatzadapters (12) ist.

10. Einsatzadapter (12) nach einem der Ansprüche 1 bis 9, wobei der Einsatzadapter (12) symmetrisch um eine Adapterebene (P_{A}) ist, die die erste und zweite Einsatzadapterseite (20A, 20B) halbiert.

11. Einsatzadapter (12) nach einem der Ansprüche 1 bis 10, wobei die Auflageflächen (52) eben sind.

12. Werkzeuganordnung (10) mit einem Werkzeughalter (16), einem am Werkzeughalter (16) angebauten Einsatzadapter (12) nach einem der Ansprüche 1 bis 11 und einem an einer der Taschen (24A, 24B, 24C, 24D, 24E) des Einsatzadapters (12) angebauten Einsatz (14); wobei der Einsatz (14) eine Schneidkante (53) aufweist, die die einzige Schneidkante der Werkzeuganordnung ist, die zum betrieblichen Gebrauch positioniert ist, wobei die Schneidkante eine Schneidkantendicke (T₁) hat, die parallel zur Adapterindexachse (I_{A}) gemessen wird; und der Einsatzadapter (12) eine parallel zur Adapterindexachse (I_{A}) gemessene Adapterdicke (T_{A}) aufweist, die kleiner ist als die Schneidkantendicke (T₁);
wobei der Werkzeughalter (16) einen länglichen Werkzeugschaft (54) und einen sich vom Werkzeugschaft (54) erstreckenden Werkzeugkopf (56) aufweist;
der Werkzeugkopf (56) eine erste und eine zweite Werkzeugauflagefläche (64A, 64B) aufweist, die vom Werkzeughalter (16) entlang eines Umfangs einer Adapteraussparung (60) vorstehen; und
der Einsatzadapter (12) an der Adapteraussparung (60) des Werkzeughalters (16) angebaut ist.

13. Werkzeuganordnung (10) nach Anspruch 12, wobei in einer Arbeitsposition eine Arbeitsrichtung (D_{O}) des Werkzeughalters (16) parallel zu einer Längsrichtung des länglichen Werkzeugschafts ist und sich eine vorderste Auflagefläche (52) im Wesentlichen senkrecht zu einer Arbeitsrichtung (D_{O}) erstreckt.

14. Werkzeuganordnung (10) nach Anspruch 12 oder 13, wobei die Adapteraussparung (60) mindestens einen Adaptersitzflächenvorsprung (62) aufweist.

15. Werkzeuganordnung (10) nach einem der Ansprüche 12 bis 14, wobei die erste und zweite Werkzeugauflagefläche (64A, 64B) die einzigen Werkzeugauflageflächen des Werkzeughalters (16) sind, so dass der Einsatzadapter (12) den Werkzeughalter (16) nur über drei Bereiche davon kontaktiert, d. h. die erste oder zweite Seite (20A, 20B) des Einsatzadapters (12) und genau zwei gerade Auflageflächen (52).

16. Werkzeuganordnung (10) nach einem der Ansprüche 12 bis 15, wobei der Werkzeugkopf eine konkav ausgesparte Werkzeugkopf-Vorderfläche (69) aufweist.

## Revendications

1. Adaptateur d'insert (12) pour tronçonnage, présentant un axe d'indice d'adaptateur (I_{A}) et comprenant : des premier et second côtés d'adaptateur parallèles (20A, 20B) reliés par une surface périphérique d'adaptateur (22) qui s'étend de manière périphérique autour de l'adaptateur d'insert (12) ;
l'axe d'indice d'adaptateur (I_{A}) s'étendant à travers le centre des premier et second côtés (20A, 20B) ; **caractérisé en ce que**
la surface périphérique d'adaptateur est formée avec trois à cinq poches (24A, 24B, 24C, 24D, 24E) et des surfaces d'appui (52) s'étendant entre les poches (24A, 24B, 24C, 24D, 24E) ;
chacune des poches (24A, 24B, 24C, 24D, 24E) est configurée pour un serrage élastique et comprend des surfaces de serrage supérieure et inférieure élastiques (30, 32) ;
dans une vue latérale de l'adaptateur d'insert (12), les surfaces d'appui (52) sont des surfaces d'appui droites s'étendant entre les poches (24A, 24B, 24C, 24D, 24E) ; et
les poches (24A, 24B, 24C, 24D, 24E) sont également espacées circonférentiellement autour de la surface périphérique d'adaptateur (22),
dans lequel l'adaptateur d'insert est réalisé en métal.

2. Adaptateur d'insert (12) selon la revendication 1, dans lequel, dans une vue latérale de l'adaptateur d'insert (12), chaque surface d'appui droite (52) comprend une partie évidée (153) située adjacente à une certaines des poches (24A, 24B, 24C, 24D, 24E), une partie non évidée (157) et une partie de transition (155) reliant la partie évidée et la partie non évidée.

3. Adaptateur d'insert (12) selon la revendication 1 ou 2, dans lequel les premier et second côtés d'adaptateur (20A, 20B) sont plans.

4. Adaptateur d'insert (12) selon l'une quelconque des revendications 1 à 3, dans lequel les deux surfaces de serrage supérieure et inférieure (30, 32) présentent une forme de crête.

5. Adaptateur d'insert (12) selon l'une quelconque des revendications 1 à 4, étant en outre formé avec une construction solide.

6. Adaptateur d'insert (12) selon l'une quelconque des revendications 1 à 5, dans lequel l'adaptateur d'insert (12) présente un volume de matière supérieur à 50 % d'un cylindre imaginaire entourant l'adaptateur d'insert (12), de préférence ledit volume est supérieur à 55 % et inférieur à 75 % du volume du cylindre imaginaire.

7. Adaptateur d'insert (12) selon l'une quelconque des revendications 1 à 6, étant en outre formé avec un trou de vis central unique (48) s'ouvrant sur les premier et second côtés d'adaptateur (20A, 20B).

8. Adaptateur d'insert (12) selon l'une quelconque des revendications 1 à 6, étant en outre formé avec une pluralité de trous de vis (137) espacés circonférentiellement de manière égale s'ouvrant sur les premier et second côtés d'adaptateur (20A, 20B).

9. Adaptateur d'insert (12) selon la revendication 8, dans lequel le nombre de trous de vis (137) est égal au nombre de poches (24A, 24B, 24C, 24D, 24E) de l'adaptateur d'insert (12).

10. Adaptateur d'insert (12) selon l'une quelconque des revendications 1 à 9, dans lequel l'adaptateur d'insert (12) est symétrique par rapport à un plan d'adaptateur (P_{A}) recoupant les premier et second côtés d'adaptateur d'insert (20A, 20B).

11. Adaptateur d'insert (12) selon l'une quelconque des revendications 1 à 10, dans lequel les surfaces d'appui (52) sont planes.

12. Ensemble d'outil (10) comprenant un support d'outil (16), un adaptateur d'insert (12) selon l'une quelconque des revendications 1 à 11 monté sur le support d'outil (16), et un insert (14) monté sur une certaine des poches (24A, 24B, 24C, 24D, 24E) de l'adaptateur d'insert (12) ;
l'insert (14) comprenant un bord de coupe (53) qui est le seul bord de coupe de l'ensemble d'outil positionné pour une utilisation opérationnelle, le bord de coupe présentant une épaisseur de bord de coupe (T₁) mesurée parallèlement à l'axe d'indice d'adaptateur (I_{A}) ;
l'adaptateur d'insert (12) comprenant une épaisseur d'adaptateur (T_{A}) mesurée parallèlement à l'axe d'indice d'adaptateur (I_{A}), qui est inférieure à l'épaisseur de bord de coupe (T₁) ;
le support d'outil (16) comprenant une tige d'outil allongée (54) et une tête d'outil (56) s'étendant à partir de la tige d'outil (54) ;
la tête d'outil (56) comprenant des première et seconde surfaces d'appui d'outil (64A, 64B) faisant saillie à partir du support d'outil (16) le long d'une périphérie d'un évidement d'adaptateur (60) ; et
l'adaptateur d'insert (12) étant monté sur l'évidement d'adaptateur (60) du support d'outil (16).

13. Ensemble d'outil (10) selon la revendication 12, dans lequel, dans une position opérationnelle, une direction opérationnelle (D_{O}) du support d'outil (16) est parallèle à une direction d'allongement de la tige d'outil allongée, et une surface d'appui la plus avant (52) s'étend sensiblement perpendiculairement à une direction opérationnelle (D_{O}).

14. Ensemble d'outil (10) selon la revendication 12 ou 13, dans lequel ledit évidement d'adaptateur (60) comprend au moins une protubérance de surface d'appui d'adaptateur (62).

15. Ensemble d'outil (10) selon l'une quelconque des revendications 12 à 14, dans lequel les première et seconde surfaces d'appui d'outil (64A, 64B) sont les seules surfaces d'appui d'outil du support d'outil (16), de sorte que l'adaptateur d'insert (12) vient en contact avec le support d'outil (16) uniquement via trois régions de celui-ci, à savoir un certain des premier et second côtés (20A, 20B) de l'adaptateur d'insert (12), et exactement deux surfaces d'appui droites (52).

16. Ensemble d'outil (10) selon l'une quelconque des revendications 12 à 15, dans lequel ladite tête d'outil comprend une surface avant de tête d'outil évidée concave (69).
